(19)

**Europäisches Patentamt**
**European Patent Office**
**Office européen des brevets**

(11) **EP 1 483 092 B1**

(12) **EUROPÄISCHE PATENTSCHRIFT**

(45) Veröffentlichungstag und Bekanntmachung des Hinweises auf die Patenterteilung:
**25.04.2007 Patentblatt 2007/17**

(21) Anmeldenummer: **02748412.0**

(22) Anmeldetag: **06.06.2002**

(51) Int Cl.:
***B29B 7/00*** *(2006.01)*

(86) Internationale Anmeldenummer:
**PCT/AT2002/000170**

(87) Internationale Veröffentlichungsnummer:
**WO 2002/100621 (19.12.2002 Gazette 2002/51)**

(54) **VERFAHREN UND VORRICHTUNG ZUR EINSTELLUNG EINER VORSPANNUNG DER MESSER EINER GRANULIERVORRICHTUNG**

VERFAHREN UND VORRICHTUNG ZUR EINSTELLUNG EINER VORSPANNUNG DER MESSER EINER GRANULIERVORRICHTUNG

PROCEDE ET DISPOSITIF DE REGLAGE DE PRECONTRAINTE DES LAMES D'UN DISPOSITIF DE GRANULATION

(84) Benannte Vertragsstaaten:
**AT BE CH CY DE DK ES FI FR GB GR IE IT LI LU MC NL PT SE TR**

(30) Priorität: **08.06.2001 AT 8942001**

(43) Veröffentlichungstag der Anmeldung:
**08.12.2004 Patentblatt 2004/50**

(73) Patentinhaber: **EREMA Engineering Recycling Maschinen und Anlagen Gesellschaft m.b.H.**
**4052 Ansfelden-Linz (AT)**

(72) Erfinder:
- **KLAMMER, Günther**
  **A-3361 Aschbach (AT)**
- **REITINGER, Norbert**
  **A-4020 Linz (AT)**

(74) Vertreter: **Wildhack, Helmut**
**Patentanwälte Wildhack - Jellinek**
**Landstrasser Hauptstrasse 50**
**1030 Wien (AT)**

(56) Entgegenhaltungen:
**EP-A- 0 418 941        DE-A- 1 959 507**
**DE-A- 2 444 839        US-A- 5 017 119**
**US-A- 5 587 186**

EP 1 483 092 B1

Printed by Jouve, 75001 PARIS (FR)

**Beschreibung**

Die Erfindung bezieht sich auf ein Verfahren zur Einstellung einer Vorspannung, mit welcher Messer eines von einer durch einen Motor angetriebenen, in axialer Richtung verschiebbaren Welle getragenen Granulierkopfes einer Granuliervorrichtung an der Lochplatte anliegen, durch deren Löcher das zu granulierende Material, insbesondere thermoplastischer Kunststoff, zugeführt wird, wobei das Drehmoment des Motors für diese Einstellung herangezogen wird. Weiters bezieht sich die Erfindung auf eine Vorrichtung zur Durchführung eines solchen Verfahrens.

Ein Verfahren der eingangs geschilderten Art ist aus EP 418 941 A2 für eine Unterwassergranuliervorrichtung bekannt, wobei die Leistungsaufnahme des Antriebsmotors der Granulierwelle dazu ausgenützt wird, die Größe der beim Messerumlauf auftretenden hydrodynamischen Kraft festzustellen.

Bekanntlich treten bei Granuliervorrichtungen Stränge einer Schmelze oder plastifizierten Masse aus den Löchern der Lochplatte aus und werden von rotierenden Granuliermessern zur Teilchenform abgeschlagen. Die geschnittenen Stränge (Granulate) werden dann je nach der Art der Granuliervorrichtung entweder direkt gekühlt (Unterwassergranulierung) oder durch die beim Abschlagevorgang auftretende Zentrifugalkraft in ein Kühlmedium geschleudert. Dieses Kühlmedium kann Luft (Luftgranulierung) oder Wasser (Wasserringgranulierung) sein. Für die Granulierung niederviskoser Massen müssen die Messer verlässlich spaltfrei an der Lochplatte anliegen, wofür es erforderlich ist, die Messer an die Lochplatte anzudrücken. Hiezu ist es bekannt, diese Andrückung mittels Federn oder mittels einer Hydraulik bzw. Pneumatik zu erreichen oder die Granulierwelle so gegen die Lochplatte vorzuschieben, dass die Messer mit einer durch Biegung erzielten Vorspannung an der Lochplatte anliegen. Die bekannten Konstruktionen haben jedoch durchwegs Nachteile. Federn neigen zur Ermüdung und zum Bruch, hydraulische bzw. pneumatische Systeme bedingen einen hohen Aufwand. Die Andrückung der Messer unter Verbiegung derselben ist unzuverlässig, da die Messer im Betrieb laufend abgenützt werden und sich dadurch der Andruck ändert.

Die Erfindung setzt sich zur Aufgabe, ein Verfahren der eingangs geschilderten Art so zu verbessern, dass eine verlässliche und möglichst gleichmäßige Andrückung der Messer an die Lochplatte der Granuliervorrichtung erzielt wird, wobei möglichst günstige Werte hinsichtlich des Messerverschleißes, des Lochplattenverschleißes und des Energieverbrauches des Motors angestrebt sind. Die Erfindung löst diese Aufgabe dadurch, dass die Welle aufeinanderfolgend in beiden axialen Richtungen mit konstanter Geschwindigkeit verstellt wird, wobei für beide Richtungen der Verlauf des Drehmomentes des Motors über den Verstellweg aufgezeichnet und daraus das Differential $\frac{dM}{dx}$ gebildet wird, worin x den Verstellweg der Welle bedeutet, dass sodann die Position $x_0$ der Welle für $\frac{dM}{dx} = 0$ bestimmt wird und dass schließlich, ausgehend von dieser Position $x_0$, eine Position $x = x_0 + x_z$ der Welle eingestellt wird, worin $x_z$ die gewünschte Zustellung der Welle in Richtung zur Lochplatte bedeutet. Die Erfindung geht hiebei von der durch Versuche gewonnenen Erkenntnis aus, dass bei konstantem Durchsatz der Granuliervorrichtung und konstanter Drehzahl der Granulierwelle des Drehmoment des Antriebsmotors der Granulierwelle bei einer bestimmten Vorschubposition derselben ein Minimum hat, und bei Verschiebung in beiden Richtungen von dieser Minimumposition ansteigt. In der Regel ist diese Minimumposition $x_0$ jene Position, an welcher die Granuliermesser die Lochplatte gerade berühren, jedoch drucklos an ihr anliegen. In der Praxis kann jedoch diese Position, bei welcher der Verschleiß der Granuliermesser sowie der Lochplatte theoretisch am geringsten ist, nicht eingehalten werden, da aufgrund von Fertigungstoleranzen sowie durch den Druck der aus der Lochplatte austretenden Schmelzestränge geringe Anpresskräfte der Granuliermesser notwendig sind. Diese spezifische Vorspannung der Granuliermesser ist abhängig vom verarbeiteten Material, welches in der Regel Kunststoff ist, doch auch von einer anderen pastösen Masse gebildet sein kann, z.B. einer Lebensmittelmasse, wie Teigwaren, Müsli usw. Weiters ist diese spezifische Vorspannung abhängig von den Verarbeitungsbedingungen. Sie muss daher auf den jeweils vorliegenden speziellen Fall abgestimmt werden. Geschieht dies im erfindungsgemäßen Sinn, so gibt sich eine verlässliche Andrückung der Messer an die Lochplatte und somit eine gute Granulatqualität, jedoch auch ein geringer Energieaufwand und eine geringe Abnützung der Messer sowie der Lochplatte, denn durch geeignete freie Wahl der verfahrensabhängigen Vorspannung lässt sich die Lebensdauer der Granuliermesser verlängern. Ebenso ist es möglich, die Vorspannung über aktuelle Prozessdaten zu steuern und im Betrieb zu verändern. Beispiele für solche veränderbare Prozessdaten sind Durchsatz und die Type des verarbeiteten Materiales, insbesondere Kunststoffes. Ebenso kann durch dieses Verfahren der Verschleiß der Granuliermesser durch laufende Nachstellung kompensiert werden.

Gemäß einer Weiterbildung des erfindungsgemäßen Verfahrens wird die Verstellung der Welle in beiden axialen Richtungen zwischen zwei Positionen $x_1$, $x_2$ durchgeführt, welche zwei vorgegebenen Grenzwerte $\delta$, $\varepsilon$ für $\frac{dM}{dx}$ entsprechen, für welche gilt $\delta < 0$ und $\varepsilon > 0$. Dadurch wird eine Prozesssicherheit gewährleistet, weil die beiden so gewählten Schranken $\delta$, $\varepsilon$ gewährleisten, dass es sicher eine Stelle zwischen den beiden Positionen $x_1$, $x_2$ gibt, für die $\frac{dM}{dx} = 0$ gilt.

Zweckmäßig wird im erfindungsgemäßen Verfahren so vorgegangen, dass vor der Bildung des Differentials

$\frac{dM}{dx}$ der Drehmomentverlauf des Motors durch ein Tiefpassfilter gefiltert wird. Dieses Tiefpassfilter glättet das Ausgangssignal der Einrichtung, welche das Drehmoment des Motors abfühlt und in ein elektrisches Ausgangssignal umsetzt.

Um sich an Änderungen der beim Granuliervorgang vorliegenden Gegebenheiten anpassen zu können, wird gemäß einer bevorzugten Ausführungsform des erfindungsgemäßen Verfahrens so vorgegangen, dass in Intervallen die Messungen wiederholt und die Einstellung der Vorspannung entsprechend verändert werden.

Die erfindungsgemäße Vorrichtung zur Durchführung des erfindungsgemäßen Verfahrens geht aus von einer Konstruktion mit einer Lochplatte, z.B. eines Extruders, an deren Löcher zumindest ein von einem Granulierkopf einer Granuliervorrichtung getragenes Messer mit Vorspannung angedrückt wird, welcher Granulierkopf innerhalb eines Granuliergehäuses von einer Welle getragen ist, die in axialer Richtung im Granuliergehäuse verschiebbar und von einem Motor zur Drehbewegung um ihre Achse angetrieben ist, wobei eine Abfühleinrichtung für den zeitlichen Verlauf des Drehmomentes des Motors vorgesehen ist, deren Ausgangssignal einen Stellantrieb für die Verschiebung der Welle beeinflusst. Ausgehend von einer solchen Bauweise kennzeichnet sich die erfindungsgemäße Vorrichtung dadurch, dass eine Einrichtung zur Bildung des Differentials $\frac{dM}{dx}$ und eine Einrichtung zur Bestimmung der Position der Welle für $\frac{dM}{dx} = 0$ an den Stellantrieb angeschlossen sind. Hierdurch wird der Stellantrieb im Sinne des erfindungsgemäßen Verfahrens gesteuert.

Vorzugsweise ist hiebei an die Abfühleinrichtung für den zeitlichen Verlauf des Drehmomentes des Motors eine, das Ausgangssignal dieser Einrichtung glättende Einrichtung, insbesondere ein Tiefpassfilter, angeschlossen, um Verfälschungen des Messergebnisses durch im Ausgangssignal dieser Abfühleinrichtung auftretende Spitzen zu vermeiden.

Um über eine längere Betriebsdauer die günstigsten Verfahrensbedingungen einzuhalten, ist gemäß einer bevorzugten Ausführungsform der Erfindung eine Eingabeeinheit für die Wiederholung der Messungen in vorbestimmten Zeitabständen vorgesehen. Diese Eingabeeinheit kann händisch oder automatisch betätigt werden, zweckmäßig in frei wählbaren Zeitintervallen.

In der Zeichnung ist die Erfindung anhand von Ausführungsbeispielen schematisch dargestellt und näher erläutert.

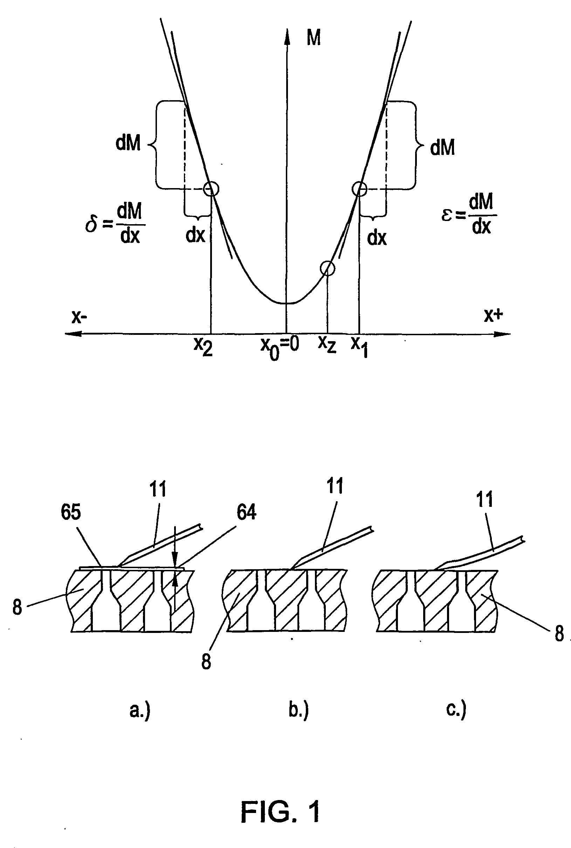

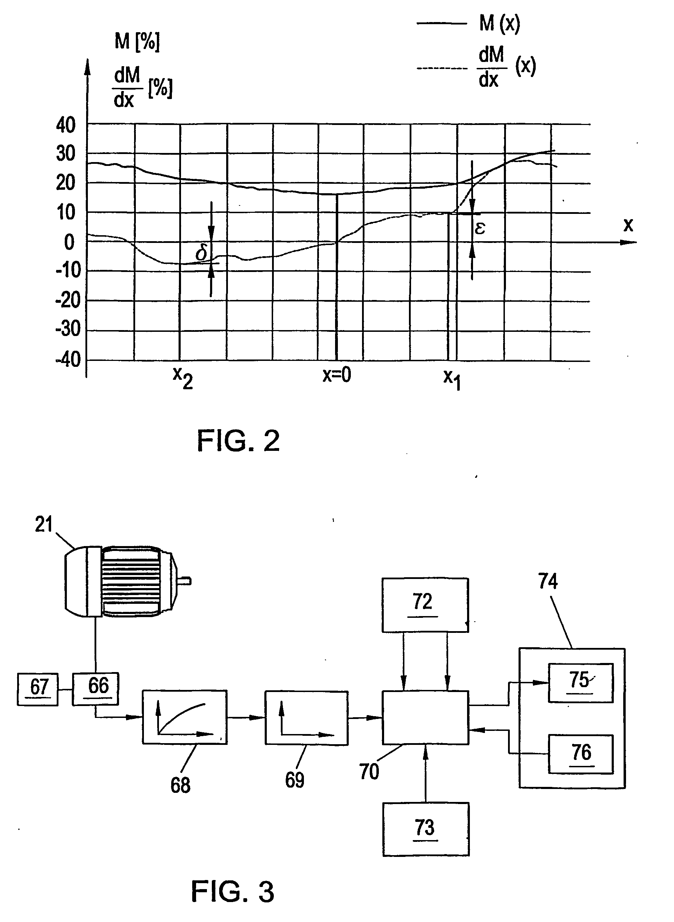

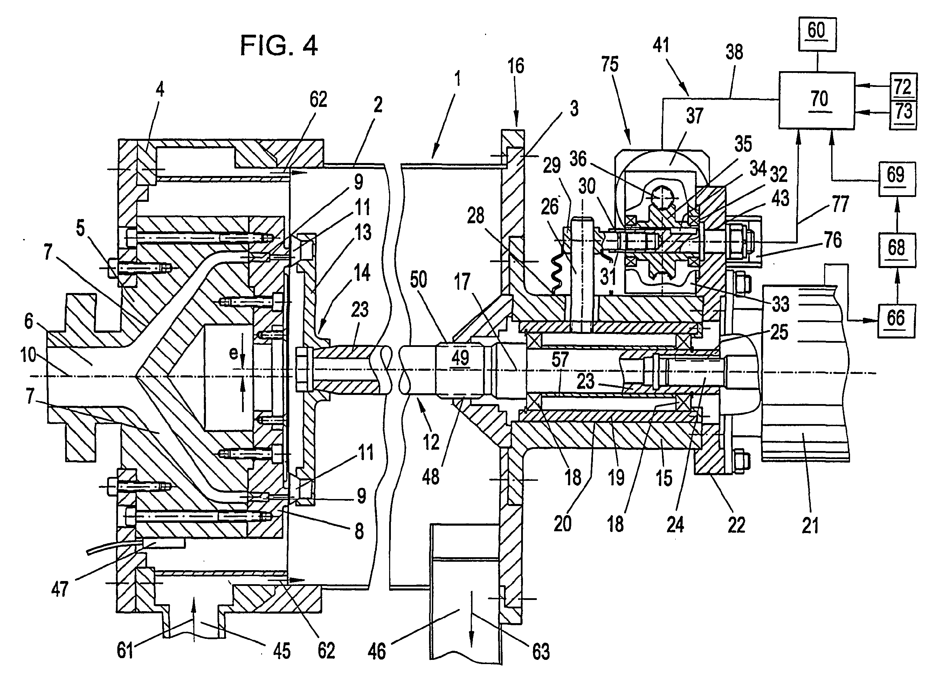

Fig. 1 zeigt den idealisierten, rechnerisch ermittelten Verlauf des Drehmomentes des Antriebsmotors der Granulierwelle in Abhängigkeit von der Verschiebeposition der Granulierwelle. Fig. 2 zeigt den durch Messung ermittelten Drehmomentverlauf und dessen differenzierten Graph über den Verschiebeweg. Fig. 3 ist ein Blockschaltbild der Steuereinheit für die axiale Verstellung der Granuliermesserwelle und Fig. 4 ist ein Längsschnitt durch eine Granuliervorrichtung.

Beim erfindungsgemäßen Verfahren wird der Leistungsbedarf des Motors 21 (Fig. 3, 4) der Granuliervorrichtung ermittelt und ausgewertet. Hiebei gilt

$$P=f(M) \text{ für konstantes } n > 0$$

Hierin bedeuten P die Leistungsaufnahme des Motors und M dessen Drehmoment. Dieses setzt sich aus folgenden Komponenten zusammen:

$$M = M_{Leerlauf} + M_{Reibung} + M_{Spalt} + M_{Kunststoff} + M_{Schnitt}$$

Hierin sind $M_{Schnitt}$ das Reaktionsmoment aufgrund des Schnittes durch den Schmelzestrang, $M_{Leerlauf}$ das Reaktionsmoment aufgrund der mechanischen Konstruktion (beinhaltend Lagerreibung und aerodynamische Kräfte), $M_{Reibung}$ das Reaktionsmoment aufgrund der Reibung der Granuliermesser an der Lochplatte, $M_{Spalt}$ das Reaktionsmoment infolge erhöhter scheinbarer Reibung aufgrund von Schneidspalt und Verdickung des Schmelzefilmes, $M_{Kunststoff}$ das Reaktionsmoment aufgrund der austretenden Kunststoffschmelze (beinhaltend Beschleunigungskräfte sowie Schnittkräfte, also im wesentlichen spezifische Kunststoffkenndaten und ausstoßspezifische Größen).

Betrachtet man zunächst verschiedene Betriebszustände, so ergibt sich:

A) Betriebszustand mit konstantem Durchsatz bei konstanter Drehzahl der Granulierwelle für x>0 (x.....Verschiebeweg der Granulierwelle). Dieser Betriebszustand ist für ein an der Lochplatte 8 anliegendes Messer 11 schematisch in Fig. 1 unten mit dem Schaubild c) dargestellt (für drucklose Anlage des Messers 11 an der Lochplatte 8 ist x = 0, dieser Betriebszustand ist in Fig. 1 mit dem Schaubild b veranschaulicht).

In diesem Betriebszustand gelten ähnliche Bedingungen wie im Trockenlauf (ohne Schmelze). Durch Erhöhen der Anpresskraft wird das Reibmoment erhöht. Aus obigen Erläuterungen kann für ein Granuliermesser folgendes vereinbart werden, wenn mit R die tangentiale Reibkraft aufgrund der Anpressung bezeichnet wird, mit $\mu$ der Reibungskoeffizient, mit r die Messerkopfarmlänge und mit N die Anpresskraft der Granuliermesser:

Mit $R = \mu \cdot N$ ergibt sich $R = f(x)$ für $x > 0$.
Mit $M_{Reibung} = R \cdot r$ und r= konstant ergibt sich

$$M_{Reibung} = f(x) \text{ für } x \geq 0$$

und

$$M_{Reibung} > 0 \text{ für } x > 0$$

$$M_{Reibung} = 0 \text{ für } x \leq 0,$$

B) Betriebszustand mit konstantem Durchsatz bei konstanter Drehzahl der Granulierwelle für x < 0.

Diesem Betriebszustand entspricht das Schaubild a) in Fig. 1.

Wie in Versuchen festgestellt wurde, steigt das Drehmoment infolge größer werdenden Spaltes 64 zwischen Granuliermesser 11 und Lochplatte 8 an. Durch größere Schneidspalte sind größere Kräfte zum Schneiden des Schmelzestranges notwendig. Eine erhöhte Ablagerung von Schmelze 65 an der Lauffläche der Granulierlochplatte vergrößert darüber hinaus den Reibungskoeffizienten zwischen Granuliermesser und Lochplatte.

Die Abhängigkeit der Kraft F von erhöhter, scheinbarer Reibung aufgrund von Schneidspalt und Verdickung des Schmelzefilmes an der Granulierlochplatte kann wiederum für ein Granuliermesser wie folgt eingeschränkt werden.

Für x=0 folgt F=0

Für x>0 folgt F=0

Für x<0 folgt F>0

Mit $M_{Spalt} = F \cdot r$ ergibt sich analog zu A)

$$M_{Spalt} = f(x) \text{ für } x \leq 0$$

und

$$M_{Spalt} > 0 \text{ für } x < 0$$

$$M_{Spalt} = 0 \text{ für } x \geq 0$$

Setzt man obiges voraus, so ergibt sich für einen Betriebszustand mit konstantem Durchsatz bei konstanter Drehzahl der Granulierwelle:

Bildet man die Differenz $\Delta M$ zweier benachbarter Betriebszustände $x_1$, $x_2$, so folgt:

$$\Delta M = M_{x2} - M_{x1}$$

Für n = konstant sowie konstanten Durchsatz und gleichbleibende Schmelzebeschaffenheit ergibt sich:

$$\Delta M = M_{Spalt, x2} - M_{Spalt, x1} + M_{Reibung, x2} - M_{Reibung, x1}$$

Daraus ergibt sich unter Berücksichtigung obiger Beziehungen $\Delta M = f(x)$ für alle x im interval $x_1, x_2$, mit $x_1 > 0$ und $x_2 < 0$, wobei gilt:

$$\Delta M = 0 \text{ für } x = 0 \text{ im Intervall } x_1, x_2$$

$$\Delta M = \Delta M_{Reibung} > 0 \text{ für } x > 0 \text{ im Intervall } 0, x_1$$

$$\Delta M = \Delta M_{Spalt} > 0 \text{ für } x < 0 \text{ im Intervall } 0, x_2$$

Versuche ergaben nun, dass der Graph des Drehmomentes M über den Weg x die in Fig. 1 dargestellte Form hat, welche Ähnlichkeiten mit einer Parabel aufweist. Bei $x_0 = 0$ hat dieser Graph ein lokales Minimum. Dieses Minimum lässt sich messtechnisch feststellen, und zwar für jede Art des zu granulierenden Materiales, jeden Massedurchsatz und jede Granulierdrehzahl, sofern nur für jeden Betriebszustand für eine kurze Zeit die Drehzahl m als konstant angesehen werden kann und ebenso der Durchsatz und die Schmelzebeschaffenheit als konstant betrachtet werden können. Da mit zur Verfügung stehenden Abfühl- bzw. Messgeräten und neuzeitlicher Logik Messungen und deren Auswertung in Sekunden durchführbar sind, können die zuvor erwähnten Voraussetzungen als gegeben betrachtet werden.

Geht man nun von der Erkenntnis aus, dass für $x_0 = 0$ der Verschleiß der Granuliermesser sowie der Lochplatte zwar theoretisch am geringsten ist, jedoch in der Praxis zur Sicherung einer einwandfreien Granulierung eine geringe Anpresskraft der Granuliermesser erforderlich ist, so kann, ausgehend von der Position $x_0 = 0$ eine spezifische Vorspannung der Granuliermesser eingestellt werden. Bezeichnet man den hiefür erforderlichen Vorschubweg der Granuliermesser mit $x_z$, so ergibt sich ein Betriebspunkt $x_z$ (Fig. 1). Der Wert von $x_z$ und die dadurch erzielte Größe der Vorspannung ergibt sich aufgrund der Federkennlinie der Granuliermesser 11 und lässt sich an aktuelle Prozessdaten, etwa Durchsatz und Type des verarbeiteten Kunststoffmaterials, mühelos anpassen. Diese Anpassung kann auch automatisch laufend gesteuert werden, sodass an unterschiedliche Verfahrensbedingungen eine laufende Anpassung gegeben ist. Hierdurch wird die Lebensdauer der Granuliermesser 11 wesentlich verlängert.

In der Praxis wird das Drehmoment, welches der Antriebsmotor 21 für die Drehung der Messerwelle 12 (Fig. 4) aufbringt, kontinuierlich gemessen. Dies geschieht mittels einer Abfühleinrichtung 66 (Fig. 3) beliebiger Bauart. Die zeitliche Auslösung der diskreten Auslösezeitpunkte t kann in beliebiger Weise manuell erfolgen, oder automatisch durch einen Messzeitpunktgeber 67, jedenfalls unmittelbar nach dem Start der Granulierung. Das Ausgangssignal der Abfühleinrichtung 66 gelangt auf ein Tiefpassfilter 68, welches eine Glättung des von der Abfühleinrichtung 66 abgegebenen Signales bewirkt. Aus dem in Fig. 2 dargestellten, etwas unruhigen Messergebnis für M, das beim Vorschub der Messerwelle 12 erhalten wird, ergibt sich dann eine geglättete Kurve, etwa nach Fig. 1. Das Ausgangssignal des Filters 68 gelangt zu einem Differenzierglied 69, durch welches aus dem Signal für M(x) das Signal $\frac{dM}{dx}$ (x) gebildet wird (Fig. 2). Eine an das Differenzierglied 69 angeschlossene Logik 70 beliebiger geeigneter Bauart bestimmt daraus das Minimum $x_0 = 0$. Da die Zustellgeschwindigkeit der Messerwelle 12 konstant ist, gilt mit hinreichender Genauigkeit $\frac{dM}{dx}$ proportional $\frac{dM}{dt}$. Um zu gewährleisten, dass es über die Messstrecke sicher eine Stelle gibt, für welche $\frac{dM}{dx} = 0$ gilt, werden über eine Eingabeeinheit 72 zwei Schranken $\varepsilon, \delta$ in den Logikschaltkreis 70 so eingegeben, dass gilt $\frac{dM}{dx} = \varepsilon$ an der Stelle $x_1$, für $x_1 > 0$. und $\frac{dM}{dx} = \delta$ an der Stelle $x_2$ für $x_2 < 0$.

Die so gefundene Position $x_0 = 0$ wird in der Folge als Referenzwert herangezogen. Sodann wird durch Vorschub der Messerwelle 12 die Position $x = x_0 + x_z$ angefahren, worin $x_z > 0$ die Prozesssicherheit definiert, welche notwendig ist, um Toleranzen auszugleichen, derart, dass eine ausreichende, jedoch minimal notwendige Messeranpresskraft gewährleistet wird. $x_z$ ist somit ein von den Verfahrensbedingungen abhängiger Parameter, der auch während des Betriebes verändert werden kann, insbesondere zur Anpassung an sich ändernde Verfahrensbedingungen. Der Parameter $x_z$ kann durch eine an den Logikschaltkreis 70 angeschlossene Eingabeeinheit 73 eingegeben oder aus einer Prozessdatenbank eingelesen werden. Diese Eingabeeinheit 73 kann auch dazu dienen, die Intervalle des Einstellvorganges zu bestimmen, sodass bei einer solchen Ausbildung der Schaltung der Messzeitpunktgeber 67 für Einstellintervalle entfallen kann.

Der Parameter $x_z$ ist ferner von der Federkennung der Granuliermesser abhängig und bei sehr starren Messern ist die Elastizität der Einspannung für die Wahl von $x_z$ eine wesentliche Größe.

Wie bereits erwähnt, ermöglicht es die beschriebene Vorgangsweise, eine Selbstnachstellung zwecks Ausgleiches des Verschleißes der Granuliermesser durchzuführen. Hiezu braucht lediglich die Eingabeeinheit 73 die Zeitpunkte t des Einstellvorganges in frei wählbaren Zeitintervallen Δt auszulösen. Eine Alternative hiezu ist, die Messzeitintervalle Δt ebenfalls prozessbedingt zu steuern. Schließlich ist auch die Auslösung der Nachstellung der Granuliermesser von Hand aus möglich.

Für die beschriebene Vorschub- und Rückzugbewegung der Messerwelle 12 sowie für die Feststellung deren jeweiliger Position dient ein Positionierantrieb 74, der einen Stellantrieb 75 und einen Positionsgeber 76 aufweist. Der Stellantrieb gewährleistet eine Vorwärts- und Rückwärtsbewegung der Messerwelle 12 mit konstanter Geschwindigkeit. Hiefür kann jeder Antrieb bekannter Bauart verwendet werden, z.B. Hydraulikzylinder, Pneumatikzylinder, Linearantriebe, Drehstrom-, Spindeltriebe oder Schrittmotore. Der Positionsgeber 76 erfasst die jeweilige Position der Messerwelle 12 und somit auch den Referenzwert $x_0$, er muss eine hinreichend genaue Reproduzierbarkeit aufweisen. Bei Stellantrieben, die mit Impulsen gesteuert werden, kann auf den Positionsgeber verzichtet werden, da die Impulse mit hinreichender Genauigkeit vom Referenzpunkt $x_0$ gezählt und ausgewertet werden können.

Der Stellantrieb 75 wird von den vom Logikschaltkreis 70 ermittelten Werten angesteuert, sodass die jeweils gewünschte Bewegung der Messerwelle 12 erzielt wird. Durch den Positionsgeber 76 wird diese Stellung jeweils festgestellt und an die Logik 70 gemeldet.

In Fig. 4 ist eine zur Durchführung des erfindungsgemäßen Verfahrens geeignete Vorrichtung dargestellt. Diese Granuliervorrichtung hat in bekannter Weise ein Gestell 16, das ein Granuliergehäuse 1 trägt, das einen zylindrischen Mantel 2 aufweist, der an seinem einen Stirnende durch eine Stirnwand 3 und an seinem anderen Stirnende durch das mit dem Düsenstock 4 verbundene Zulaufstück 5 abgeschlossen ist. Das Zulaufstück 5 hat einen Zulaufkanal 6 für das zu granulierende Material, an welchen Verzweigungsleitungen 7 angeschlossen sind, die zu den Düsen 9 des Düsenstockes 4 führen, die in einer Lochplatte 8 im Kreis um die Achse 10 des Zulaufstückes 5 verteilt angeordnet sind. Die aus den Düsen 9 austretenden Stränge werden durch Messer 11 abgeschlagen, welche an radialen Armen 13 des Messerkopfes 14 der Messerwelle 12 angeordnet sind. Die Welle 12 ist in einem als Stutzen 15 des Gestelles 16 ausgebildeten Lagergehäuse drehbar gelagert. Außerdem ist die Messerwelle 12 mittels des Stellantriebes 75 in Richtung ihrer Achse 17 in bezug auf das Gestell 16 längsverschieblich, um die Messer 11 jeweils mit dem gewünschten Druck an die Lochplatte 8 andrücken zu können. Hiefür ist die Welle 12 mittels Wälzlagern 18 in einer Hülse 19 drehbar gelagert, die in einer zylindrischen Bohrung 20 des Stutzens 15 in ihrer Längsrichtung verschiebbar ist. Die Verdrehung der Welle 12 um ihre Achse 17 erfolgt durch den Motor 21, der zweckmäßig drehzahlveränderbar ist, z.B. ein Drehstrommotor, der an einen mit dem Stutzen 15 verbundenen Flansch 22 angeschraubt ist. Um zu vermeiden, dass der Motor 21 die Längsverschiebung der Welle 12 mitmachen muss, ist die Welle 12 in zwei Abschnitte 23, 24 unterteilt, die miteinander drehschlüssig mittels eines Keiles 25 so verbunden sind, dass sich der Abschnitt 23 relativ zum Abschnitt 24 in Axialrichtung der Welle 12 bewegen kann, der Abschnitt 24 aber seine axiale Lage stets beibehält.

Die beiden Lager 18 der Messerwelle 12 sind voneinander mittels Sprengringen und durch eine Distanzhülse 57 in Abstand gehalten.

Die Hülse 19 trägt einen Mitnehmer 26 in Form eines in die Hülse 19 eingeschraubten radialen Zapfens, der einen in Axialrichtung der Welle 12 verlaufenden Schlitz 28 des Stutzens 15 durchsetzt und in ihm geführt ist. Der Schlitz 28 ist so lang, dass sich in ihm der Zapfen 26 für die in Frage kommenden Verstellwege des Wellenabschnittes 23 bewegen kann. Das freie Ende dieses Mitnehmers 26 liegt in einer Öffnung des Kopfes 29 einer sich in Axialrichtung der Welle 12 erstreckenden Gewindespindel 30, die in eine Gewindehülse 31 eingeschraubt ist. Diese Gewindehülse 31 ist in einem Gehäuse 33 drehbar gelagert, das an den Flansch 22 angeschraubt ist. Die Gewindehülse 31 trägt an ihrer Mantelfläche einen Keil 34, der in eine Längsnut der mittigen Öffnung des Schneckenrades 35 eines Schneckentriebes eingreift, sodass das Schneckenrad 35 mit der Gewindehülse 31 drehschlüssig verbunden ist. Das mittels Lagern 32 im Gehäuse 33 drehbar gelagerte und durch die Lager 32 gegen Axialverschiebung gesicherte Schneckenrad 35 kämmt mit einer Schnecke 36, die mit der Abtriebswelle eines Servomotors 37 des Stellantriebes 75 drehschlüssig verbunden ist, der am Gehäuse 33 befestigt ist. Der Servomotor 37 wird für die automatische Nachstellung des Messerkopfes 14 über eine Leitung 38 von dem Logikkreis 70 angespeist. Wie in Fig. 3 dargestellt, erhält der Logikkreis 70 über die Bauteile 66, 68, 69 laufend die am Motor 21 ermittelten Drehmomentwerte in gefilterter und differenzierter Form. Das Drehmoment des Motors 21 bzw. der analoge Amperewert hängt davon ab, mit welchem Druck die Messer 11 über die Stirnfläche der Lochplatte 8 schleifen.

Stellt die Logik 70 fest, dass eine Verschiebung der Messerwelle zwecks Änderung des Anpressdruckes der Messer 11 erforderlich ist, so wird über die Leitung 38 der Stellantrieb 75 so angespeist, dass über das von den Bauteilen 26 bis 36 gebildete Getriebe die Hülse 19 in Richtung zur Lochplatte 8 verschoben wird, sodass die Messer 11 anders als zuvor an die Lochplatte 8 angedrückt werden. Hierbei nimmt die Hülse 19 über die Wälzlager 18 den Wellenabschnitt 23 in Axialrichtung mit. Die Keilverbindung 25 sorgt dafür, dass diese Axialbewegung vom Wellenabschnitt 24 nicht mitgemacht wird. Erreicht das vom Motor 21 aufzubringende Drehmoment bzw. seine Stromaufnahme wieder den gewünschten Wert, so wird der Stellmotor 37 wieder stillgesetzt.

Der Positionsgeber 76 kann in beliebiger Weise ausgebildet sein. Die beschriebene Bauweise gibt aber in einfacher Weise die Möglichkeit, den Positionsgeber 76 als Winkelgeber auszubilden, der mit der Gewindehülse 31 drehschlüssig verbunden ist und deren Relativverdrehung in Bezug auf das ortsfeste Gestell 16 bzw. dessen Flansch 22 für die Positionsgabe ausnützt. Sein Signal ist über die Leitung 77 an die Logik 70 gelegt.

Die Übertragung der Drehzahl der Abtriebswelle des Servomotors 37 über ein Schneckengetriebe und die Gewindeverbindung zwischen Gewindespindel 30 und Gewindehülse 31 gewährleisten eine sehr feine Verstellmöglichkeit für die Messer 11 und damit eine Feinregelung des Anpressdruckes, sowie die Möglichkeit, handelsübliche Bauteile zu verwenden. Außerdem wirkt die Kupplung zwischen Schneckenrad 35 und Schnecke 36 selbsthemmend derart, dass die Hülse 19 und damit der die Messer tragende Wellenabschnitt 23 sich nicht unbeabsichtigt in Axialrichtung bewegen können. Um eine möglichst gleichmäßige Abnützung der Messer 11 über deren gesamte Schneidkantenlänge zu erzielen, kann die Anordnung so getroffen werden, dass die Achse 17 der Messerwelle 12 um eine Exzentrizität e so exzentrisch liegt in bezug auf die Achse 10 der Lochplatte 8 bzw. zum Mittelpunkt des Kreises, auf welchem die Düsen 9 angeordnet sind, dass die gesamte Schneidenlänge der Messer 11 ausgenützt wird. Dadurch wird eine längere Standzeit der Messer 11 erreicht.

Eine Verlängerung der Gewindehülse 31 durchsetzt eine Öffnung 43 des Flansches 22 und trägt außen ein Gewinde, auf welches eine Mutter 44 aufgeschraubt und mittels eines Splints 52 gesichert ist. Ferner trägt die Gewindehülse 31 einen Bund 53, der zusammen mit der Mutter 44 die Axiallage der Gewindehülse 31 in bezug auf den Flansch 22 sichert. Eine Voreinstellung der Axiallage der Gewindehülse 31 und damit der Messerwelle 12 ist dennoch nach Wunsch möglich, wenn der Mitnehmer 26 aus der Hülse 19 herausgeschraubt und aus der Öffnung 27 herausgezogen wird. Die Gewindespindel 30 lässt sich dann in der Gewindehülse 31 verdrehen, was eine Änderung der axialen Lage der Öffnung 27 und damit der Messerwelle 12 zur Folge hat, wenn der Mitnehmer 26 wieder in die Öffnung 27 eingesetzt wird.

An die Logik. 60 kann eine Anzeige- bzw. Signaleinrichtung 60 angeschlossen sein, welche optisch und/oder akustisch anzeigt, dass eine automatische Nachstellung im Gange ist und deren Signal erlischt, sobald die Nachstellung den gewünschten Erfolg hat, d.h., das gewünschte Andruckintervall der Messer 11 an der Lochplatte 8 bzw. die diesem Intervall entsprechende Größe der überwachten Betriebsgröße des Motors 21 wieder erreicht ist.

In das Granuliergehäuse 1 mündet in bekannter Weise eine Kühlmittelzuleitung 45, zweckmäßig für Wasser, welches Kühlmittel in Richtung des Pfeiles 61 zuströmt und aus nicht dargestellten Verzweigungsleitungen in Richtung der Pfeile 62 in den Bereich der Düsen 9 eingespritzt wird. Die von den Messern 11 abgeschlagenen linsen- oder zylinderförmigen Granulatteilchen werden dadurch sofort nach dem Austritt aus den Düsen 9 gekühlt und zusammen mit dem Kühlmittel über einen Auslass 46 aus dem Granuliergehäuse 1 in Richtung des Pfeiles 63 abgeführt. Die Temperatur im Zulaufstück 5 kann durch einen Fühler 47 überwacht werden. Um zu vermeiden, dass durch die Öffnung 48 der Stirnwand 3, durch welche die Messerwelle 12 hindurchgeführt ist, Kühlmittel in den Bereich der Lagerung der Messerwelle 12 gelangt, ist der in dieser Öffnung 48 liegende Abschnitt 49 mit einem Rückfördergewinde 50 versehen, das bei der Umdrehung der Messerwelle 12 eine Förderwirkung in Richtung zum Messerkopf 14 hat.

Ein den Mitnehmer 26 umgebender, auf den Stutzen 15 aufgesetzter und an ihm gehaltener Balg verhindert, dass Verunreinigungen durch den Schlitz 28 in das Innere des Stutzens 15 gelangen können.

**Patentansprüche**

1. Verfahren zur Einstellung einer Vorspannung, mit welcher Messer eines von einer durch einen Motor angetriebenen, in axialer Richtung verschiebbaren Welle getragenen Granulierkopfes einer Granuliervorrichtung an der Lochplatte anliegen, durch deren Löcher das zu granulierende Material, insbesondere thermoplastischer Kunststoff, zugeführt wird, wobei das Drehmoment des Motors für diese Einstellung herangezogen wird, **dadurch gekennzeichnet, dass** die Welle aufeinanderfolgend in beiden axialen Richtungen mit konstanter Geschwindigkeit verstellt wird, wobei für beide Richtungen der Verlauf des Drehmomentes des Motors über den Verstellweg aufgezeichnet und daraus das Differential $\frac{dM}{dx}$ gebildet wird, worin x den Verstellweg der Welle bedeutet, dass sodann die Position $x_0$ der Welle für $\frac{dM}{dx} = 0$ bestimmt wird und dass schließlich, ausgehend von dieser Position $x_0$, eine Position x = $x_0 + x_z$ der Welle eingestellt wird, worin $x_z$ die gewünschte Zustellung der Welle in Richtung zur Lochplatte bedeutet.

2. Verfahren nach Anspruch 1, **dadurch gekennzeichnet, dass** die Verstellung der Welle in beiden axialen Richtungen zwischen zwei Positionen $x_1$, $x_2$ durchgeführt wird, welche zwei vorgegebenen Grenzwerten $\delta$, $\varepsilon$, für $\frac{dM}{dx}$ entsprechen, für welche gilt $\delta < 0$ und $\varepsilon > 0$.

3. Verfahren nach Anspruch 1 oder 2, **dadurch gekennzeichnet, dass** vor der Bildung des Differentials $\frac{dM}{dx}$ Das

Signal des Drehmomentverlaufes des Motors durch ein Tiefpassfilter gefiltert wird.

**4.** Verfahren nach einem der Ansprüche 1 bis 3, **dadurch gekennzeichnet, dass** zu diskreten Zeitpunkten t die Messungen wiederholt und die Einstellung der Vorspannung entsprechend verändert wird.

**5.** Vorrichtung zur Durchführung des Verfahrens nach einem der Ansprüche 1 bis 4, mit einer Lochplatte (8), z.B. einem Extruder, an deren Düsen (9) zumindest ein von einem Granulierkopf (14) einer Granuliervorrichtung getragenes Messer (11) mit Vorspannung angedrückt wird, welcher Granulierkopf (14) innerhalb eines Granuliergehäuses (1) von einer Welle (12) getragen ist, die in axialer Richtung im Granuliergehäuse (1) verschiebbar und von einem Motor (21) zur Drehbewegung um ihre Achse (10) angetrieben ist, wobei eine Abfühleinrichtung (66) für den zeitlichen Verlauf des Drehmomentes (M) des Motors (21) vorgesehen ist, deren Ausgangssignal einen Stellantrieb (75) für die Verschiebung der Welle (12) beeinflusst, **dadurch gekennzeichnet, dass** eine Einrichtung (69) zur Bildung des Differentials $\frac{dM}{dx}$ und eine Einrichtung (70) zur Bestimmung der Position ($x_0$) der Welle (12) für $\frac{dM}{dx} = 0$, an den Stellantrieb (75) angeschlossen sind.

**6.** Vorrichtung nach Anspruch 5, **dadurch gekennzeichnet, dass** an die Abfühleinrichtung (66) für den zeitlichen Verlauf des Drehmomentes des Motors (21) eine das Ausgangssignal dieser Einrichtung (66) glättende Einrichtung, insbesondere ein Tiefpass-Filter (68), angeschlossen ist.

**7.** Vorrichtung nach Anspruch 5 oder 6, **dadurch gekennzeichnet, dass** eine Eingabeeinheit (73) für die Wiederholung der Messungen in vorbestimmten Zeitabständen vorgesehen ist.

**Claims**

**1.** Process for regulating a bias force with which knives of a granulating head, being driven by a motor and supported by a shaft displaceable in axial direction, of granulating means engage an orifice plate, through the orifices of which the material to be granulated, particularly thermoplastic material, is supplied, wherein the torque of the motor is used for this adjustment, **characterised in that** the shaft is successively displaced in both axial directions at a constant speed, the course of torque of the motor over the adjusting path is recorded for both directions, and the differential $\frac{dM}{dx}$ is formed from it, wherein x is the adjusting path of the shaft, that the position $x_0$ of the shaft is then determined for $\frac{dM}{dx} = 0$, and that finally, starting from this position $x_0$, a position of $x = x_0 + x_z$ of the shaft is adjusted, wherein $x_z$ is the desired closing of the shaft in the direction towards the orifice plate.

**2.** Process according to claim 1, **characterised in that** the adjustment of the shaft is carried out in both axial directions between two positions $x_1$, $x_2$ which correspond to two predetermined boundary values of $\delta$, $\varepsilon$ for $\frac{dM}{dx}$ to which applies $\delta < 0$ and $\varepsilon > 0$.

**3.** Process according to claim 1 or 2, **characterised in that** before forming the differential of $\frac{dM}{dx}$, the signal of the course of torque of the motor is filtered through a low-pass filter.

**4.** Process according to any of claims 1 to 3, **characterised in that** the measurements are repeated at discrete moments t, and the adjustment of the bias force is changed accordingly.

**5.** Device for carrying out the process according to any of claims 1 to 4, comprising an orifice plate (8), e.g. an extruder, against the nozzles (9) of which at least one knife (11) supported by a granulating head (14) of a granulating device is biased with said bias force, said granulating head (14) being supported within a granulating housing (1) by a shaft (12) which is displaceable in axial direction within said granulating housing (1) and is driven for a rotating movement about its axis (10) by a motor (21), a sensor device (66) for the course of torque (M) of the motor (21) in time being provided, the output signal of which influences adjustment drive means (75) for displacing the shaft (12), **charac-**

**terised in that** means (66) for forming the differential of $\frac{dM}{dx}$ and means (70) for determining the position ($x_0$) of the shaft (12) for $\frac{dM}{dx} = 0$, are coupled to said adjustment drive means (75).

6. Device according to claim 5, **characterised in that** to said sensor device (66) for the course of torque (M) of the motor (21) in time, a means, in particular a low-pass filter (68), is coupled which smoothens the output signal of this device (66).

7. Device according to claim 5 or 6, **characterised in that** an input unit (73) for repeating the measurements at predetermined intervals is provided.

**Revendications**

1. Procédé de réglage de précontrainte, avec lequel des lames d'une tête de granulation, portée par un arbre, qui est entraîné par un moteur et déplaçable en direction axiale, d'un dispositif de granulation contacte une filière, le matériau à granuler, particulièrement une matière plastique, étant admis à travers les trous de celle-ci, dans lequel on utilise le couple de rotation du moteur pour ce réglage, **caractérisé en ce, que** l'arbre est successivement déplacé dans les deux directions axiaux à une vitesse constante, où on registre, pour les deux directions, le cours du couple de rotation du moteur sur le chemin de déplacement, on en forme le différentiel $\frac{dM}{dx}$, dans lequel x signifie le chemin de déplacement de l'arbre, de manière que puis on détermine la position $x_0$ de l'arbre pour $\frac{dM}{dx} = 0$, et que l'on ajuste finalement une position de $x = x_0 + x_z$ de l'arbre à partir de cette position $x_0$, dans laquelle $x_z$ signifie l'approche souhaitée de l'arbre en direction vers la filière.

2. Procédé selon la revendication 1, **caractérisé en ce, que** le déplacement de l'arbre est effectué dans les deux directions axiaux entre deux positions $x_1$, $x_2$, qui correspondent à deux valeurs limites prédéterminés $\delta$, $\varepsilon$ pour $\frac{dM}{dx}$, pour lesquels est valable $\delta < 0$ et $\varepsilon > 0$.

3. Procédé selon la revendication 1 ou 2, **caractérisé en ce, que** l'on filtre le signal du cours du couple de rotation du moteur par un filtre passe-bas avant la formation du différentiel $\frac{dM}{dx}$.

4. Procédé selon une quelconque des revendications 1 à 3, **caractérisé en ce, que** l'on répète les mesures aux moments t discrets, et on varie en correspondance l'ajustage de la précontrainte.

5. Dispositif pour la mise en oeuvre du procédé selon une quelconque des revendications 1 à 4, comprenant une plaque de filière (8), par exemple une extrudeuse, contre les trous de filière (9) de laquelle on presse au moins une lame (11) portée par une tête de granulation (14) d'un dispositif de granulation avec une précontrainte, ladite tête de granulation (14) étant portée au dedans d'un boîtier de granulation (1) par un arbre (12), qui est déplaçable dans une direction axiale dans le boîtier de granulation (1) et est entraîné à un mouvement rotatif autour de son axe (10) par un moteur (21), un dispositif capteur (66) pour le cours du couple de rotation (M) du moteur (21) dans le temps étant prévu, dont le signal de sortie influence un servomoteur (75) pour le déplacement de l'arbre (12), **caractérisé en ce, qu'**un dispositif (69) pour la formation du différentiel $\frac{dM}{dx}$ et un dispositif (70) pour déterminer la position ($x_0$) de l'arbre (12) pour $\frac{dM}{dx} = 0$ sont reliés au servomoteur (75).

6. Dispositif selon la revendication 5, **caractérisé en ce, qu'**au dispositif capteur (66) pour le cours du couple de rotation du moteur (21) dans le temps est relié un dispositif, qui lisse le signal de sortie de ce dispositif (66), particulièrement un filtre passe-bas (68).

**7.** Dispositif selon la revendication 5 ou 6, **caractérisé en ce, qu'**une unité d'entrée (73) pour la répétition des mesures dans des intervalles prédéterminés est prévu.

$$\delta = \frac{dM}{dx} \qquad \varepsilon = \frac{dM}{dx}$$

FIG. 1

FIG. 2

FIG. 3

FIG. 4